# EUROPÄISCHE PATENTSCHRIFT

(11) **EP 0 753 541 B1**
(45) Veröffentlichungstag und Bekanntmachung des Hinweises auf die Patenterteilung: **02.04.2003**
(21) Anmeldenummer: 96810445.5
(22) Anmeldetag: 10.07.1996
(51) Int. Cl.: C08L 97/02, B27N 1/00

(54) **Formmasse auf Basis von pflanzlichen Fasern, Verfahren zur Herstellung von Formkörpern, Vorrichtung zum Pressen von Formmassen sowie Formteil**
Moulding composition from vegetable fibres, process for producing moulded article, apparatus for pressing the moulding composition and moulded part
Masse à mouler, à base de fibres végétales, procédé de production d'un article moulé, dispositif de pressage de la masse à mouler et pièce moulée

(30) Priorität: 11.07.1995 CH 201895
(43) Veröffentlichungstag der Anmeldung: 15.01.1997
(73) Patentinhaber: BCT AG, 9401 Rorschach (CH)
(72) Erfinder: Rentsch, Fritz, 3454 Sumiswald (CH)
(74) Vertreter: Groner, Manfred

(56) Entgegenhaltungen:
- DE-A- 1 703 147
- DATABASE WPI Week 9538 Derwent Publications Ltd., London, GB; AN 95-291356 XP002016067 & RU-A-2 028 941 (SEMOCHKIN) , 20.Februar 1995
- DATABASE WPI Week 9525 Derwent Publications Ltd., London, GB; AN 95-190091 XP002016068 & JP-A-07 107 863 (SUZUKI SOGYO KK) , 25.April 1995

## Beschreibung

Die Erfindung betrifft ein Verfahren nach dem Oberbegriff des Anspruchs 1.

Die JP-A-07 107 863 bzw. die Zusammenfassung in der DATABASE WPI, Week 9525, offenbart einen Blumentopf, der aus biologisch nur schwer abbaubaren dicken, pflanzlichen Fasern und einem biologisch abbaubaren Bindemittel hergestellt wird. Die Fasern werden mit dem Bindemittel zu einer Matte verbunden und diese wird in einer Form zu einem Pflanztopf geformt. Das Bindemittel ist insbesondere Zelluloseazetat oder Polycaprolactam.

Im Stand der Technik ist aus der WO 95/04111 ein sogenannter Vor-Formkörper in Granulatform bekannt geworden, der beispielsweise durch Extrusion aus pflanzlichem Fasermaterial, einem Bindemittel, Harzsäure, Fette, Öle, Wachse, expansionsunterdrückenden Polyolen sowie Salzen hergestellt wird. Zur Herstellung von Formteilen werden diese Granulate im Spritzgiessverfahren oder durch Extrusion umgeformt. Eine Umformung soll auch im Pressverfahren möglich sein, wie in dieser Schrift nebenbei erwähnt ist. Zur Herstellung der genannten Granulate sind vergleichsweise viele Komponenten erforderlich, insbesondere Harze oder Harzsäure sowie Fette, Öle und Wachse. Es hat sich auch gezeigt, dass mit Granulaten im Pressverfahren Formteile entstehen, die oft Bruchstellen aufweisen. Nachteilig ist ebenfalls der vergleichsweise kleine Anteil von Fasern an der Gesamtmasse.

Eine Formmasse dieser Art ist ebenfalls aus der WO 92/10246 bekannt geworden. Diese besteht aus wenigstens 2% Fasermaterial und 30% Bindemittel. Die Fasern sind aus Zellulose oder aus mineralischem Material. Die Fasern und das Bindemittel werden mit einer wässerigen Lösung gemischt. Die Formteile werden mit dieser Mischung im Spritzgiessverfahren hergestellt. Versuche haben gezeigt, dass der Faseranteil von Granulaten für Spritzgiessmaschinen nur in Sonderfällen über 40% liegen kann. Die Wandstärke und entsprechend der Materialverbrauch sind hier vergleichsweise hoch.

Der Erfindung liegt die Aufgabe zugrunde, ein Verfahren der genannten Art zu schaffen, das sich für die Herstellung biologisch abbaubarer Formteile besser eignet. Die Aufgabe ist gemäss Anspruch 1 gelöst. Mit diesem Verfahren können Formteile mit einem Faseranteil insbesondere von 50 bis 75% verarbeitet werden. Besonders vorteilhaft ist, dass die aufgelockerte und vorzugsweise flockige oder wollartige Formmasse sich an eine Formwand mit Rollen oder Walzen und damit vorverteilen lässt. Eine solche vorverteilte und vorzugsweise bereits auf erhöhte Temperatur gebrachte Formmasse kann in vergleichsweise kurzer Zeit zu einem sehr dünnwandigen Formteil verarbeitet werden. Wesentlich ist, dass hierbei der Fliessweg der vorverteilten Formmasse vergleichsweise kurz ist. Versuche haben gezeigt, dass Taktzeiten von etwa 4 bis 10 Sekunden möglich sind. Da das Fliessen des Pressmaterials auf ein Minimum beschränkt werden kann, können auch Formteile mit Steilwänden und geringer Wandstärke, insbesondere unter 1 mm hergestellt werden. Die Formmasse eignet sich deshalb insbesondere zur Herstellung von Pflanzen- oder Blumentöpfen.

Durch Extrusion in einem Extruder werden die Fasern beleimt, dann aufgelocken und proportioniert einer Pressvorrichtung zugeführt, wo die aufgelockerten Fasern in einer Pressform zuerst heiss und dann kalt nachgepresst, wobei Wasser als Wasserdampf entweichen kann. Wesentlich ist, dass die Formteile nach dem Heisspressen nachgepresst werden, wobei dem Formteil Wärme entzogen wird. Damit wird erreicht, dass Blasen im Formteil, welche durch die Feuchtigkeit im Pressmaterial erzeugt wurden, beseitigt werden und keine neue Blasen entstehen können. Das Verfahren ermöglicht damit ein Verarbeiten von Pressmaterial mit einem erhöhten Wassergehalt, insbesondere etwa 5 bis 20% Wassergehalt.

Die Erfindung betrifft ebenfalls eine Vorrichtung zur Durchführung des Verfahrens.

Ein erfindungsgemässer Formteil, hergestellt nach dem erfindungsgemässen Verfahren, ist dadurch gekennzeichnet, dass der Faseranteil höher als 50 Gew.%, vorzugsweise 70 Gew.%, dass die Faserlänge kürzer als 30 mm ist und dass die Fasern aus Chinaschilf hergestellt sind. Nach einer vorzugsweisen Weiterbildung beträgt der Anteil der Fasern und des Bindemittels am Gesamtgewicht mindestens 90%. Der Formteil ist beispielsweise ein Pflanztopf, denkbar sind aber auch andere Gebrauchsartikel, beispielsweise Verpackungsbehälter. Diese Teile können nach ihrem Gebrauch beispielsweise in einem Häxler verkleinert und kompostiert werden.

Die Erfindung wird nachfolgend anhand der Zeichnung näher erläutert. Es zeigen:
- Figur 1: schematisch eine Anordnung zur Herstellung der Formmasse und der erfindungsgemässen Formteile, und
- Figuren 2 bis 7: schematisch das Pressen von Formteilen.

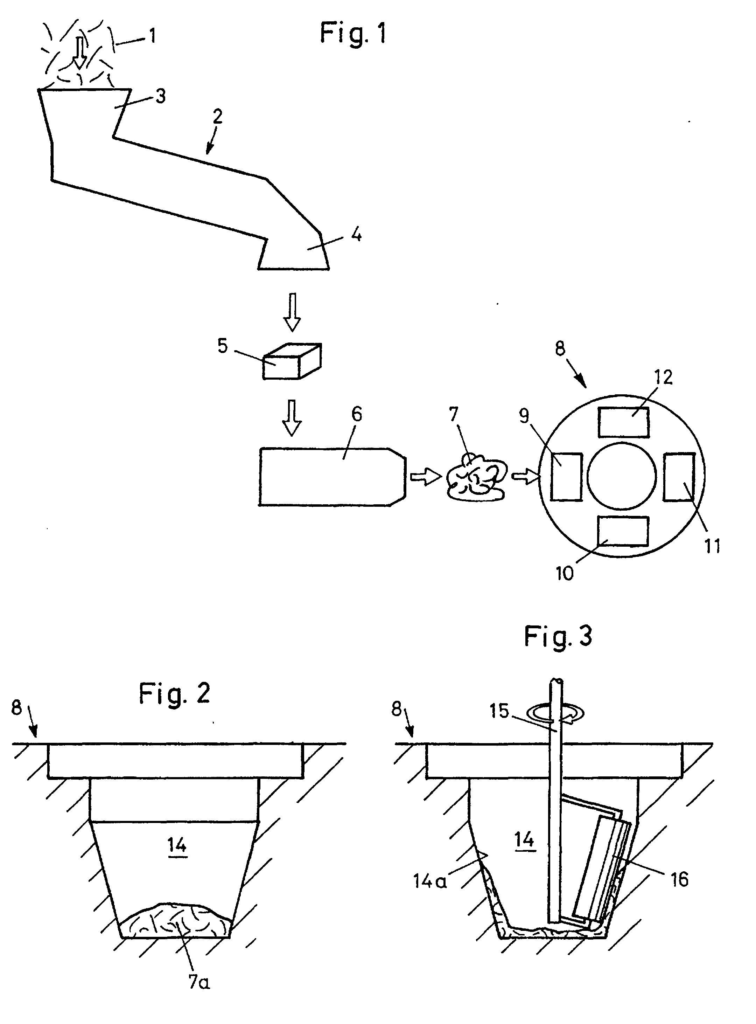

Die Figur 1 zeigt schematisch einen Extruder 2 mit einem Eingang 3 und einem Ausgang 4. In diesem Extruder 2 wird gehäxeltes Pflanzenmaterial 1 zu einer verfilzten Fasermasse 5 aufbereitet. Das Pflanzenmaterial 1 ist beispielsweise ein Gemisch aus gehäxeltem Schilf, beispielsweise Chinaschilf (Miscantus), einem Binder, beispielsweise Stärke oder Lignin sowie Wasser. Die Wasserzugabe liegt vorzugsweise zwischen 15 und 25 Gew.%. Der Anteil des Binders beträgt beispielsweise 20 bis 30 Gew.%.

Der Extruder 2 ist vorzugsweise ein Doppelschneckenextruder. Im Innern des Extruders 2 herrscht bei der Verarbeitung des Pflanzenmaterials 1 eine vergleichsweise grosse Wärme und ein grosser Druck, bei denen der Verbund der Fasern aufgebrochen wird und eine verfilzte Fasermasse entsteht, die stark verdichtet den Extruder 2 am Ausgang 4 verlässt.

Die verdichtete Fasermasse 5 wird beispielsweise mittels einer motorgetriebenen Bürstentrommel 6 klein aufgelockert. Die Bürstentrommel 6 kann jedoch auch eine andere geeignete Vorrichtung, beispielsweise ein Fräser sein. Die aufgelokkerte Masse 7 bildet die Formmasse, die in einer Pressvorrichtung 8 zu Pressteilen verarbeitet wird. Die Formmasse 7 bildet ein Geflecht aus sich überlappenden Fasern und ist flockig oder wollartig. Die Faserlänge ist vergleichsweise kurz und liegt vorzugsweise im Bereich von 5 bis 30 mm. Selbstverständlich ist auch ein gewisser kleiner Anteil von wesentlich kleineren oder längeren Fasern möglich. Der Binder ist in die Fasern eingearbeitet und von diesen im wesentlichen vollständig aufgenommen.

Die Pressvorrichtung 8 weist einen Drehtisch 13 auf, der vier Stationen 9 bis 12 aufweist. Die erste Station ist eine Ladestation 9, bei der von einer grösseren Menge der Formmasse 7 entsprechend dem Stückgewicht eine bestimmte Menge abgewogen und bereitgestellt wird. Diese abgewogene Menge 7a (Figur 2) wird in ein Formunterteil 14 gegeben.

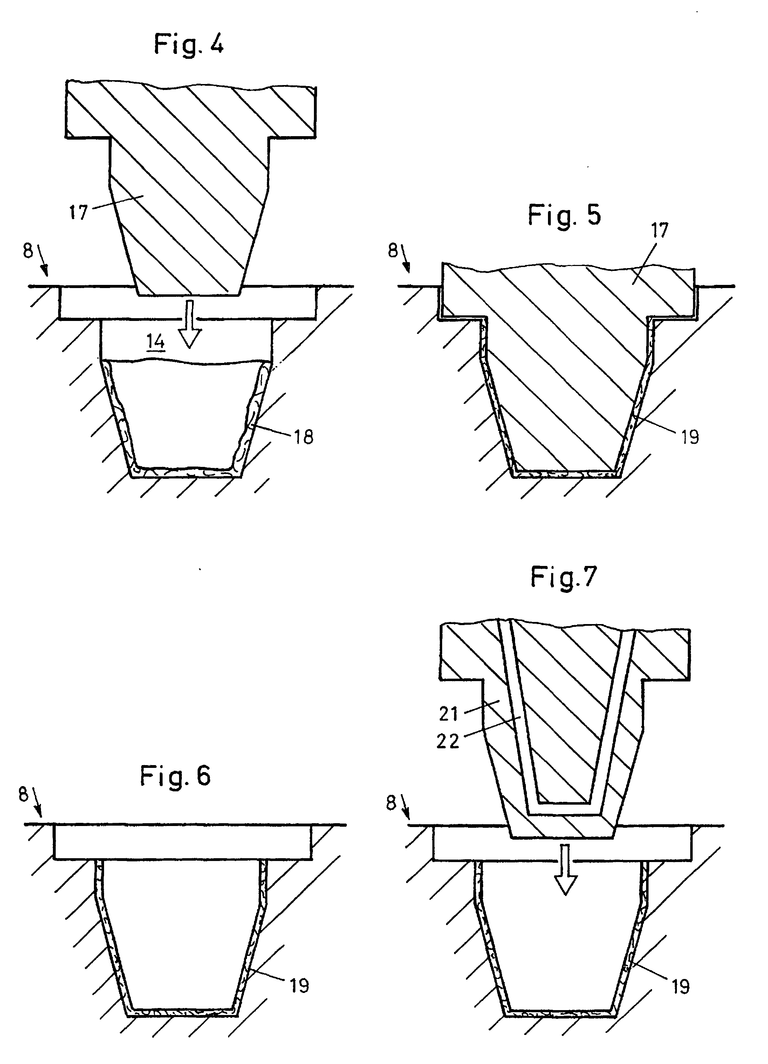

Die nächste Station ist eine Vorverteilstation 10, bei der die Formmasse 7 im Formunterteil 14 mit einem rotierenden Werkzeug 15 vorverteilt wird. Das Werkzeug 15 weist beispielsweise Rollen oder Walzen 16 auf, und dient dazu, die Formmasse 7 möglichst gleichmässig an der Formwand 14a des Formunterteils 14 zu verteilen. Das Resultat ist ein gleichmässig vorverdichteter Belag 18, wie die Figur 4 zeigt. Dieser Belag 18 nimmt bereits während des Vorverteilens eine vergleichsweise hohe Temperatur an und zerfällt beim Eintauchen einer Gegenform 17 nicht mehr.

Die dritte Station ist eine Heisspressstation 11, in der mit der Gegenform 17 die vorverteilte Formmasse beispielsweise in die in Figur 5 gezeigte Form 19 gebracht wird. Beim Eintauchen der Gegenform 17 beginnt der bereits vorbeheizte und vorverdichtete Belag sofort zu fliessen. Nach dem Heisspressvorgang wird die Gegenform 17 ausgefahren, wobei der Formteil 19 im Formunterteil 14 verbleibt und die in der Formmasse enthaltene Flüssigkeit weitgehend verdampft. Hierbei können hier nicht gezeigte Ausformhilfen erforderlich sein. Diese sind dem Fachmann an sich bekannt und werden deshalb hier nicht näher erläutert.

Der Formteil 19 kann nach dem Ausfahren der Gegenform 17 noch leichte Deformierungen und Blasen aufweisen, die in der Heisspressstation 11 entstanden sind.

Die vierte Station ist eine Kaltpressstation 12, bei welcher eine kalte Gegenform 21 in das heisse Formteil 19 gepresst wird. Die kalte Gegenform 21 entzieht dem Formteil 19 Wärme und gibt ihm die endgültige Form. Die Gegenform 21 kann mit Kanälen 22 für eine Kühlflüssigkeit versehen sein. Durch das Nachpressen werden Blasen und Deformationen des Formteils 19 beseitigt. Durch den Entzug von Wärme sinkt die Temperatur des Formteils 19 unter 100°C und dadurch wird die Entstehung weiterer Dampfblasen verhindert. Beim Ausfahren der Gegenform 21 bleibt der Formteil 19 an der kalten Gegenform 21 und kann von dieser abgeblasen und auf ein hier nicht gezeigtes Förderband abgestellt werden. Wesentlich ist, dass der Wassergehalt einen vergleichsweise geringen Einfluss auf die Qualität des Formteils 19 ausübt. Die Bandbreite des Wassergehaltes der Formmasse 7 kann vergleichsweise breit sein. Möglich ist ein Wassergehalt bis etwa 25 Gew.%. Wesentlich ist zudem, dass durch den kleinen Fliessweg in der Heisspressstation 11 Bruchstellen weitgehend vermieden werden können. Ein kurzer Fliessweg bedeutet auch die Möglichkeit, den Fasergehalt vergleichsweise hoch anzusetzen. Der Fasergehalt an der Formmasse 7 kann höher als 50% sein und bis etwa 90 Gew.% betragen. Da das Bindemittel in die Fasern eingearbeitet ist, kann der Anteil des Binders vergleichsweise niedrig gehalten werden. Zusätze, wie beispielsweise Harze oder Harzsäuren sind nicht erforderlich. Die Vorverteilung in der Station 10 hat insbesondere den Vorteil, dass die Wärme in der Heisspressstation 11 sehr schnell angenommen und lediglich eine kurze Presszeit erforderlich ist. Dies ermöglicht sehr kurze Taktzeiten. Der Formteil 19 ist beispielsweise ein Blumen- oder Pflanztopf. Seine Wandstärke kann vergleichsweise klein, beispielsweise 1 mm oder kleiner sein. Der Formteil 19 kann jedoch beispielsweise auch ein Verpackungsbehälter oder ein anderer Gebrauchsgegenstand sein.

## Patentansprüche

1. Verfahren zur Herstellung von Formkörpern auf Basis von pflanzlichen Fasern und eines Bindemittels, **dadurch gekennzeichnet, dass** eine Formmasse hergestellt wird, indem das Bindemittel durch Extrusion in die Fasern eingearbeitet wird und die Fasern danach fein aufgelockert werden und dass die Formmasse zuerst heiß gepresst und dann kalt nachgepresst wird, wobei dem Formteil Wärme entzogen wird.

2. Verfahren nach Anspruch 1, **dadurch gekennzeichnet, dass** die Fasern aus Chinaschilf hergestellt werden.

3. Verfahren nach Anspruch 1 oder 2, **dadurch gekennzeichnet, dass** die Fasern hauptsächlich eine Länge im Bereich von 3 bis 50 mm, vorzugsweise 5 bis 30 mm aufweisen.

4. Verfahren nach einem der Ansprüche 1 bis 3, **dadurch gekennzeichnet, dass** der Fasergehalt zwischen 50 bis 90 Gew. % beträgt.

5. , Verfahren nach Anspruch 4, **dadurch gekennzeichnet, dass** der Rest der Masse im wesentlichen Bindemittel ist.

6. Verfahren nach einem der Ansprüche 1 bis 5, **dadurch gekennzeichnet, dass** die Formmasse flockig oder wollartig ist.

7. verfahren nach einem der Ansprüche 1 bis 6, **dadurch gekennzeichnet, dass** die Formmasse proportioniert einer Pressvorrichtung (8) zugeführt wird und dass die aufgelockerten Fasern in einer Pressform (14) heiss gepresst werden.

8. Verfahren nach Anspruch 7, **dadurch gekennzeichnet, dass** die aufgelockerten Fasern (7a) in der Pressform (14) vorverteilt werden.

9. Verfahren nach Anspruch 7 oder 8, **dadurch gekennzeichnet, dass** die Fasern vor dem Verpressen zu einer flockigen oder wollartigen Formmasse (7) aufgelockert werden, die vergleichsweise trocken ist, wobei die Länge der Fasern im wesentlichen im Bereich zwischen 3 bis 50 mm, vorzugsweise 5 bis 30 mm liegt.

10. Vorrichtung zum Durchführen des Verfahrens gemäss Anspruch 1, **gekennzeichnet durch**:
a) einen Extruder zum Einarbeiten des Bindemittels in die Fasern,
b) eine Ladestation (9), mit der eine dem Stückgewicht entsprechende Menge der Formmasse (7) abgewogen und bereitgestellt wird,
c) Mittel (6) zum Auflockern der mit Bindemittel versehenen Fasern,
d) eine Heißpreßstation, und
e) eine Kaltpressstation (12), in der dem Formteil (19) Wärme entzogen wird und dem Formteil (19) die endgültige Form gegeben wird.

11. Vorrichtung nach Anspruch 10, **gekennzeichnet durch** Mittel (15, 16) zum Vorverteilen der aufgelockerten Formmasse (7) an einer Formwand (14a), insbesondere **durch** Rollen oder Walzen der Formmasse (7) unter Temperaturerhöhung der Formmasse.

12. Formteil, **dadurch gekennzeichnet, daß** er mit einer gemäss Anspruch 1 hergestellten Formmasse 3 hergestellt ist, und dass der Faseranteil höher als 50 Gew.%, vorzugsweise 70 Gew.% ist, dass die Faserlänge kürzer als 30 mm ist und dass die Fasern aus Chinaschilf hergestellt sind.

13. Formteil nach Anspruch 12, **dadurch gekennzeichnet, dass** von seinem Gesamtgewicht der Anteil der Fasern und des Bindemittels mindestens 90% beträgt.

14. Formteil nach Anspruch 12 oder 13, **dadurch gekennzeichnet, dass** er wenigstens bereichsweise eine Wandstärke von etwa 1 mm aufweist.

15. Formteil nach Anspruch 14, **dadurch gekennzeichnet, dass** er ein Pflanztopf ist.

## Claims

1. Process for producing mouldings based on plant fibres and a binder, **characterized in that** a moulding is produced by working the binder into the fibres by extrusion and then finely loosening the fibres and **in that** the moulding composition is firstly hot-pressed and then subsequently cold-pressed, heat being extracted from the moulded part.

2. Process according to Claim 1, **characterized in that** the fibres are produced from China reed.

3. Process according to Claim 1 or 2, **characterized in that** the fibres mainly have a length in the range from 3 to 50 mm, preferably 5 to 30 mm.

4. Process according to one of Claims 1 to 3, **characterized in that** the fibre content is between 50 and 90% by weight.

5. Process according to Claim 4, **characterized in that** the remainder of the composition is essentially binder.

6. Process according to one of Claims 1 to 5, **characterized in that** the moulding composition is flaky or wool-like.

7. Process according to one of Claims 1 to 6, **characterized in that** the moulding composition is fed in a proportioned manner to a pressing apparatus (8) and **in that** the loosened fibres are hot-pressed in a compression mould (14).

8. Process according to Claim 7, **characterized in that** the loosened fibres (7a) are predistributed in the compression mould (14).

9. Process according to Claim 7 or 8, **characterized in that**, before the compression moulding, the fibres are loosened into a flaky or wool-like moulding composition (7), which is comparatively dry, the length of the fibres essentially lying in the range between 3 to [sic] 50 mm, preferably 5 to 30 mm.

10. Apparatus for carrying out the process according to Claim 1, **characterized by**:
a) an extruder for working the binder into the fibres,
b) a loading station (9), with which an amount of the moulding composition (7) corresponding to the piece weight is weighed out and prepared,
c) means (6) for loosening the fibres provided with binder,
d) a hot-pressing station, and
e) a cold-pressing station (12), in which the heat is extracted from the moulded part (19) and the moulded part (19) is given the final shape.

11. Apparatus according to Claim 10, **characterized by** means (15, 16) for predistributing the loosened moulding composition (7) on a mould wall (14a), in particular by rolling the moulding composition (7) while the temperature of the moulding composition is increased.

12. Moulded part, **characterized in that** it is produced with a moulding composition 3 produced according to Claim 1, and **in that** the fibre fraction is higher than 50% by weight, preferably 70% by weight, **in that** the fibre length is shorter than 30 mm and **in that** the fibres are produced from China reed.

13. Moulded part according to Claim 12, **characterized in that** the proportion of its overall weight accounted for by the fibres and the binder is at least 90%.

14. Moulded part according to Claim 12 or 13, **characterized in that** it has, at least in certain regions, a wall thickness of approximately 1 mm.

15. Moulded part according to Claim 14, **characterized in that** it is a plant pot.

## Revendications

1. Procédé de fabrication de corps moulés sur la base de fibres végétales et d'un liant, **caractérisé en ce qu'**on fabrique une masse à mouler en incorporant par extrusion le liant dans les fibres et qu'on ameublit ensuite finement les fibres et **en ce que** la masse à mouler est tout d'abord pressée à chaud et ensuite pressée ultérieurement à froid, de la chaleur étant soustraite de la pièce moulée.

2. Procédé selon la revendication 1, **caractérisé en ce que** les fibres sont fabriquées à partir de roseau de Chine.

3. Procédé selon l'une ou l'autre des revendications 1 et 2, **caractérisé en ce que** les fibres présentent principalement une longueur dans la plage de 3 à 50 mm, de préférence de 5 à 30 mm.

4. Procédé selon l'une des revendications 1 à 3, **caractérisé en ce que** la teneur en fibres est entre 50 et 90 % en poids.

5. Procédé selon la revendication 4, **caractérisé en ce que** le reste de la masse est sensiblement du liant.

6. Procédé selon l'une des revendications 1 à 5, **caractérisé en ce que** la masse moulée est floconneuse ou laineuse.

7. Procédé selon l'une des revendications 1 à 6, **caractérisé en ce que** la masse moulée est amenée de manière proportionnée à un dispositif de pressage (8) et **en ce que** les fibres ameublies sont pressées à chaud dans un moule de pressage (14).

8. Procédé selon la revendication 7, **caractérisé en ce que** les fibres ameublies (7a) sont réparties auparavant dans le moule de pressage (14).

9. Procédé selon l'une ou l'autre des revendications 7 et 8, **caractérisé en ce que** les fibres sont ameublies avant le pressage pour former une masse moulée floconneuse ou laineuse, qui est comparativement sèche, la longueur des fibres étant sensiblement dans la plage entre 3 et 50 mm, de préférence de 5 à 30 mm.

10. Dispositif de mise en oeuvre du procédé selon la revendication 1,
**caractérisé par** :
a) une extrudeuse pour incorporer le liant dans les fibres,
b) une station de chargement (9) avec laquelle une quantité de masse moulée (7) correspondant au poids unitaire est pesée et préparée,
c) des moyens (6) pour ameublir les fibres pourvues de liant,
d) une station de pressage à chaud, et
e) une station de pressage à froid (12) dans laquelle on soustrait de la chaleur à la pièce moulée (19) et on confère à la pièce moulée (19) sa forme définitive.

11. Dispositif selon la revendication 10, **caractérisé par** des moyens (15, 16) de répartition préalable de la masse moulée (7) ameublie dans une paroi de moule (14a), en particulier par roulement ou laminage de la masse moulée (7) en augmentant la température de la masse moulée.

12. Pièce moulée, **caractérisée en ce qu'**elle est fabriquée avec une masse moulée fabriquée selon la revendication 1, et **en ce que** la part de fibres est supérieure à 50 % en poids, de préférence 70 % en poids, **en ce que** la longueur des fibres est inférieure à 30 mm et **en ce que** les fibres sont fabriquées à partir de roseau de Chine.

13. Pièce moulée selon la revendication 12, **caractérisée en ce que** la part des fibres et du liant est d'au moins 90 % de son poids total.

14. Pièce moulée selon l'une ou l'autre des revendications 12 et 13, **caractérisée en ce qu'**elle présente au moins localement une épaisseur de paroi d'approximativement 1 mm.

15. Pièce moulée selon la revendication 14, **caractérisée en ce qu'**elle constitue un pot à plante.
